# EUROPEAN PATENT APPLICATION

(11) **EP 4 033 388 A1**
(43) Date of publication of application: **27.07.2022**
(21) Application number: 21153463.1
(22) Date of filing: 26.01.2021
(51) Int. Cl.: G06F 21/60, H04L 9/32, G06F 21/64

(54) **SYSTEM AND METHOD FOR FACILITATING OPTIMISING SMART CONTRACT**

(71) Applicant: Continental Automotive GmbH, 30165 Hannover (DE)
(72) Inventor: Mahanta, Snigdhayan, 60488 Frankfurt am Main (DE); Griesbeck, Martin, 60488 Frankfurt am Main (DE)
(74) Representative: Continental Corporation

(57) **Abstract**

The present invention relates to a system and a method for facilitating optimising a smart contract, and particularly relates to a system and a method for facilitating optimising each smart contract deployed in a plurality of nodes on a distributed ledger. In accordance with an aspect of the present invention, there is a system for facilitating optimising a smart contract comprising: a plurality of computing devices of a plurality of entities, wherein each of the plurality of computing devices is operable to deploy its custom smart contract respectively; and a master device operable to track custom smart contracts of the plurality of computing devices, characterised in that: the master device is operable to optimise the custom smart contracts based on a system optimisation parameter and environmental information applicable for the plurality of entities.

## Description

### TECHNICAL FIELD

The present invention relates to a system and a method for facilitating optimising a smart contract, and particularly relates to a system and a method for facilitating optimising each smart contract deployed in a plurality of nodes on a distributed and decentralised ledger.

### BACKGROUND

The following discussion of the background is intended to facilitate an understanding of the present invention only. It may be appreciated that the discussion is not an acknowledgement or admission that any of the material referred to was published, known or part of the common general knowledge of the person skilled in the art in any jurisdiction as at the priority date of the present invention.
A blockchain technology is a technology which is resistant to modification of its data. The blockchain comprises a continuously expandable list of data blocks that are linked to one another using cryptography. Each block may contain a cryptographic hash of the previous block, a timestamp and transaction data. As such, each block may be used to describe a list of transactions and/or data which is recorded in a ledger over a certain period of time.

Once data is recorded, the data in any specific block cannot be altered retroactively without alteration of all the other blocks, for example subsequent blocks. For use as a distributed and decentralised ledger, the blockchain may be managed by a peer-to-peer network. The peer-to-peer system without a central authority to manage the data stream may represent a special kind of distributed systems. For example, the peer-to-peer system may comprise individual computing devices, also known as nodes.
With a popularization of the blockchain, blockchain-based smart contracts are introduced. Users or developers may deploy tiny code snippets of business logic on top of the data of the blockchain. The users may build services utilising their own data and optimise their smart contract from their own perspective. However, in a decentralised environment, this local optimisation strategy may not be globally optimal.

In light of the above, there exists a need to provide a solution that meets the mentioned needs at least in part.

### SUMMARY

Throughout the specification, unless the context requires otherwise, the word "comprise" or variations such as "comprises" or "comprising", will be understood to imply the inclusion of a stated integer or group of integers but not the exclusion of any other integer or group of integers.

Furthermore, throughout the specification, unless the context requires otherwise, the word "include" or variations such as "includes" or "including", will be understood to imply the inclusion of a stated integer or group of integers but not the exclusion of any other integer or group of integers.

The present invention seeks to provide a system and a method that addresses the aforementioned need at least in part.

The technical solution is provided in the form of a system and a method for facilitating optimising a smart contract. The system comprises a plurality of computing devices of a plurality of entities. Each of the plurality of computing devices is operable to deploy its custom smart contract respectively. The system further comprises a master device operable to track custom smart contracts of the plurality of computing devices. The master device is operable to access and set a system optimisation parameter, and globally optimise the custom smart contracts based on the system optimisation parameter and environment information applicable for the plurality of entities.
Since the master device can globally optimise the custom smart contracts based on the system optimisation parameter and environment information applicable for the plurality of entities, each smart contract deployed in a plurality of nodes on a distributed ledger is easily optimised, adjusted and managed by the master device according to changes of regulation and/or environment. Accordingly, the present invention is able to reduce costs and efforts required to optimise and adjust each of the smart contracts.

In accordance with an aspect of the present invention, there is a system for facilitating optimising a smart contract comprising: a plurality of computing devices of a plurality of entities, wherein each of the plurality of computing devices is operable to deploy its custom smart contract respectively; and a master device operable to track custom smart contracts of the plurality of computing devices, characterised in that: the master device is operable to optimise the custom smart contracts based on a system optimisation parameter and environment information applicable for the plurality of entities.

In some embodiments, the master device is operable to access the system optimisation parameter and set the system optimisation parameter.

In some embodiments, each of the plurality of computing devices is operable to optimise an optimisation parameter of its custom smart contract.

In some embodiments, the master device is operable to set the system optimisation parameter based on change in the environmental information and adapt the system optimisation parameter to the custom smart contracts.

In some embodiments, where at least one computing device among the plurality of computing devices deploys a custom smart contract, the master device is operable to adapt the system optimisation parameter applied to the custom smart contract to other custom smart contracts.

In some embodiments, the plurality of computing devices is implemented as a plurality of nodes on a distributed ledger.

In some embodiments, the distributed ledger comprises a plurality of blocks, and each block of the plurality of blocks stores information relating to the system optimisation parameter as blockchain data.

In some embodiments, at least one of the plurality of computing devices and the master device is operable to utilise a machine learning algorithm or a deep learning model to continuously and autonomously learn from the blockchain and other environmental information.

In accordance with another aspect of the present invention, there is a method of facilitating optimising a smart contract comprising steps of: deploying, by each of a plurality of computing devices of a plurality of entities, its custom smart contract respectively; tracking, by a master device, custom smart contracts of the plurality of computing devices; and optimising, by the master device, the custom smart contracts based on a system optimisation parameter and environment information applicable for the plurality of entities.

In some embodiments, the method further comprises steps of: accessing, by the master device, the system optimisation parameter; and setting, by the master device, the system optimisation parameter.

In some embodiments, the method further comprises a step of: optimising, by the master device, an optimisation parameter of its custom smart contract.

In some embodiments, the method further comprises steps of: setting, by the master device, the system optimisation parameter based on change in the environmental information; and adapting or setting constraints on, by the master device, the system optimisation parameter to the custom smart contracts.

In some embodiments, the method further comprises a step of: where at least one computing device among the plurality of computing devices deploys a custom smart contract, adapting or setting constraints on, by the master device, the system optimisation parameter applied to the custom smart contract to other custom smart contracts.

Other aspects of the invention will become apparent to those of ordinary skilled in the art upon review of the following description of specific embodiments of the present invention in conjunction with the accompanying drawings.

### BRIEF DESCRIPTION OF DRAWINGS

The present invention will now be described, by way of example only, with reference to the accompanying drawings, in which:
Fig. 1 is a block diagram in accordance with an embodiment of the present invention.
Fig. 2 is a flowchart in accordance with an embodiment of the present invention.

Other arrangements of the present invention are possible and, consequently, the accompanying drawings are not to be understood as superseding the generality of the preceding description of the invention.

### DETAILED DESCRIPTION OF EMBODIMENT

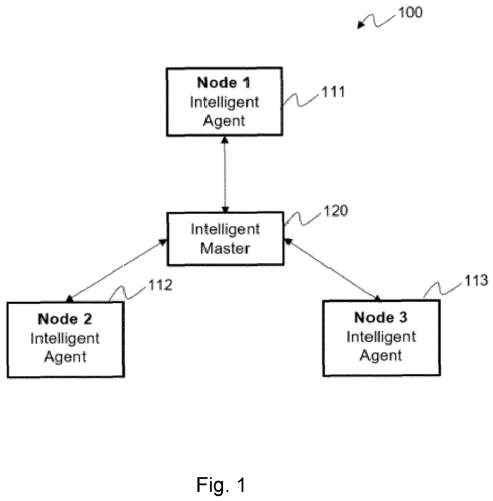

Fig. 1 is a block diagram in accordance with an embodiment of the present invention. There is a system 100 for facilitating optimising a smart contract. The system 100 comprises a plurality of computing devices 110. For example, as shown in Fig. 1, the system 100 may comprise three computing devices 110 (hereinafter referred to as a "first computing device 111", a "second computing device 112" and a "third computing device 113") of a plurality of entities.

The plurality of computing devices 100 may belong to the plurality of entities respectively. For example, the first computing device 111, the second computing device 112 and the third computing device 113 belong to a first entity, a second entity and a third entity respectively.

The plurality of entities may include, but not limited to, a driver, a vehicle, a company (for example, vehicle servicing company, vehicle insurance provider, etc.) and any other agency.

The computing device 110 may include, but not be limited to, smartphone, tablet computer, laptop computer, desktop computer, wearable device and any type of controller. The wearable device may include, but not be limited to, smart watch, smart glasses or mobile virtual reality headset. It may be appreciated that the entity may use a plurality of computing devices 110, for example a smartphone and a smart watch. In some embodiments, the plurality of computing devices 110 may communicate with each other.

In some embodiments, the system 100 may provide at least one distributed ledger across the plurality of entities. As such, the plurality of computing devices 110 is implemented as a plurality of nodes on a distributed ledger. In some embodiments, the distributed ledger comprises a plurality of blocks. Each block of the plurality of blocks stores information relating to a system optimisation parameter as blockchain data or system environment variables with appropriate access control mechanism.

In some embodiments, there may be a basic set of rules defined initially as ground truth in a smart contract layer. Each of the plurality of computing devices 110 may deploy its custom smart contract respectively. Each of the plurality of computing devices 110 may optimise the optimisation parameters of its custom smart contract.

Each node and/or participant may deploy tiny code snippets of business logic on top of the data of the blockchain. Each node and/or participant may build services utilising their own data and optimise their custom smart contract from their own perspective.

Hereinafter, the custom smart contracts in which each node and/or participant locally deploys for its own optimisation purposes may be referred to as "intelligent agents". Each custom smart contract is the intelligent agent that optimises functionalities of a particular participant from its own perspective.

The system 100 may further comprise a master device 120. For example, the master device 120 may belong to a master entity. For example, the master entity may include, but not be limited to a government agency or any other agency having an authorisation.

The master device 120 may track custom smart contracts of the plurality of computing devices 110. In some embodiments, the master device 120 may access the system optimisation parameter and set the system optimisation parameter. The system optimisation parameter (also referred to as a "global system optimisation parameter") may include the parameter which can adapt and optimise or set constraints on the custom smart contracts of the plurality of entities. It may be appreciated that, in some embodiments, a set of system optimisation parameters may be utilised.

In some embodiments, there may be three different types of parameters (i.e. individual node/device parameters, system parameters, and environmental parameters). Each computing device/node 110 is operable to read and write the individual node/device parameters, but read the system parameters and the environmental parameters. The master device 120 is operable to read and write the individual node/device parameters and the system parameters, but read the environmental parameters. The government/regulatory body is operable to read the individual node/device parameters and system parameters, but read and write the environmental parameters.

The master device 120 may optimise or set constraints on the custom smart contracts based on the system optimisation parameter and environmental information (also referred to as "global environmental information") applicable for the plurality of entities. Therefore, the custom smart contracts of the plurality of entities in the blockchain network may be optimised based on the system optimisation parameter.

In some embodiments, the master device 120 (for example, the master device 120 belonging to the government) may set the system optimisation parameter based on change in the environmental information. The master device 120 may adapt or set constraints on the system optimisation parameter to the custom smart contracts.

Specifically, the master device 120 may track or monitor the environmental information relevant to the regulation to be complied. In this manner, the regulation can be reflected to the environmental information.

The environmental information may include, but not be limited to, weather information, road tax policy, and so on. It may be appreciated that the system optimisation parameter may be influenced and changed by the master device 120, whereas the environmental information may be monitored by the master device 120.

In this manner, the master device 120 may consider and react to the change in the environmental information. The change in the regulation may be a human activity. From the system's perspective, this change in the regulation may be discernible if some environmental information that is tracked by the system changes. As such, the system (including the master device 120) may track the relevant environmental information.

In some embodiments, the master device 120 may adapt or set constraints on the system optimisation parameter to all the custom smart contracts. In some other embodiments, the master device 120 may select at least one custom smart contract among the custom smart contracts based on characteristics or properties of the system optimisation parameter, and then adapt or set constraints on the system optimisation parameter to the selected custom smart contract.

Hereinafter, the master device 120 may be referred to as an "intelligent master" which may continuously track the performance of the custom smart contracts and globally optimise them based on the system optimisation parameter and the environmental information valid for all participants / nodes.

For example, the plurality of entities may include OEMs, vehicle insurance companies and vehicle servicing companies. The plurality of entities together forms a decentralised network of participants. The government, as an intelligent master 120, enacts a legislation that requires all companies to promote eco-friendly mobility. The intelligent master 120 may optimise the smart contracts of each participant in such a manner that for the network of participants as a whole eco-friendly mobility is optimised.

The intelligent master 120 may then set the system optimisation parameter based on "carbon emission" to dynamically adjust custom smart contracts in a way that results in less emission, as shown in Table 1.

**[Table 1: Example of system optimisation parameter]**

| **System optimisation parameter** | **Value** |
|---|---|
| Carbon emission | < 100g / Km |
| Mobility cost reduction | > 10% |

The intelligent master 120 may adapt insurance custom smart contracts (for example, polluting vehicles have a higher premium) as shown in Table 2. As such, the intelligent master 120 enables the vehicle insurance companies to optimise their insurance premiums based on vehicle data and/or service data.

**[Table 2: Example of Node 3 optimisation parameters]**

| **Node 3 optimisation parameter** | **Value** |
|---|---|
| Claims reduction | > 5% |
| Insurance revenue | > 20% |

In some other embodiments, where at least one computing device among the plurality of computing devices 110 deploys a custom smart contract, the master device 120 may adapt or set constraints on the system optimisation parameter applied to the custom smart contract to other custom smart contracts.

In some other embodiments, at least one of the plurality of computing devices 110 and the master device 120 may utilise a machine learning algorithm or a deep learning model to continuously and autonomously learn from the blockchain and other environmental information.

As described above, according to the present invention, the custom smart contracts are triggered, managed and/or adjusted automatically by the intelligent agents and intelligent master 120 based on an environment.

According to the present invention, the individual participants may be able to truly utilise the full potential of access to the data in the decentralised and distributed ledger contributed by all participants. In the decentralised peer to peer network supporting the smart contract layer, the present invention may enhance the capabilities of the peers by adding the intelligence to the smart contract layer.

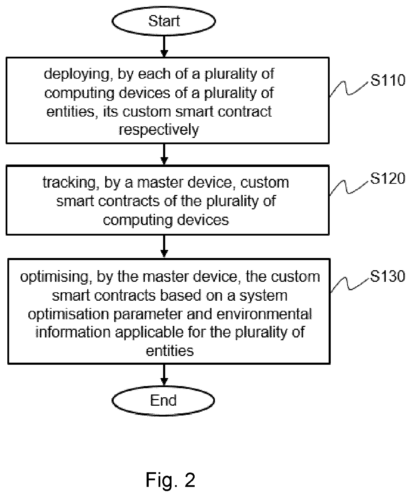

Fig. 2 is a flowchart in accordance with an embodiment of the present invention.

Each of the plurality of computing devices 110 of the plurality of entities deploys its custom smart contract respectively (S110). Each of the plurality of computing devices 110 may optimise an optimisation parameter of its custom smart contract. It may be appreciated that the optimisation parameter may include its own optimisation parameters.

The master device 120 tracks the custom smart contracts of the plurality of computing devices 110 (S120). The master device 120 then optimises the custom smart contracts based on the system optimisation parameter and environmental information applicable for the plurality of entities (S130). The master device 120 may access the system optimisation parameter and set the system optimisation parameter. The master device 120 may track or monitor the environmental information relevant to the regulation to be complied. In this manner, the regulation can be reflected to the environmental information. Thereafter, the master device 120 may optimise the custom smart contracts based on the system optimisation parameter and the environmental information.

While the present invention has been particularly shown and described with reference to exemplary embodiments thereof, it will be understood by those skilled in the art that various changes in form and details may be made therein without departing from the spirit and scope of the present invention as defined by the appended claims. However, this is merely an exemplarily embodiment, and those skilled in the art will recognize that various modifications and equivalents are possible in light of the above embodiments.

**List of reference signs**

| | |
|---|---|
| 100: System | 110: Computing device |
| 111: First computing device | 112: Second computing device |
| 113: Third computing device | 120: Master device |

## Claims

1. A system for facilitating optimising a smart contract comprising:
a plurality of computing devices of a plurality of entities, wherein each of the plurality of computing devices is operable to deploy its custom smart contract respectively; and
a master device operable to track custom smart contracts of the plurality of computing devices, **characterised in that**:
the master device is operable to optimise the custom smart contracts based on a system optimisation parameter and environmental information applicable for the plurality of entities.

2. The system according to claim 1, wherein the master device is operable to access the system optimisation parameter and set the system optimisation parameter.

3. The system according to any of claims 1 and 2, wherein each of the plurality of computing devices is operable to optimise an optimisation parameter of its custom smart contract.

4. The system according to any of claims 1 to 3, wherein the master device is operable to set the system optimisation parameter based on change in the environmental information and adapt the system optimisation parameter to the custom smart contracts.

5. The system according to any of claims 1 to 4, wherein where at least one computing device among the plurality of computing devices deploys a custom smart contract, the master device is operable to adapt the system optimisation parameter applied to the custom smart contract to other custom smart contracts.

6. The system according to any of claims 1 to 5, wherein the plurality of computing devices is implemented as a plurality of nodes on a distributed ledger.

7. The system according to claim 6, wherein the distributed ledger comprises a plurality of blocks, and each block of the plurality of blocks stores information relating to the system optimisation parameter as blockchain data.

8. The system according to claim 7, wherein at least one of the plurality of computing devices and the master device is operable to utilise a machine learning algorithm or a deep learning model to continuously and autonomously learn from the blockchain and other environmental information.

9. A method of facilitating optimising a smart contract comprising steps of:
deploying, by each of a plurality of computing devices of a plurality of entities, its custom smart contract respectively;
tracking, by a master device, custom smart contracts of the plurality of computing devices; and
optimising, by the master device, the custom smart contracts based on a system optimisation parameter and environmental information applicable for the plurality of entities.

10. The method according to claim 9 further comprising steps of:
accessing, by the master device, the system optimisation parameter; and
setting, by the master device, the system optimisation parameter.

11. The method according to any of claims 9 and 10 further comprising a step of: optimising, by the master device, an optimisation parameter of its custom smart contract.

12. The method according to any of claims 9 to 11 further comprising steps of:
setting, by the master device, the system optimisation parameter based on change in the environmental information; and
adapting or setting constraints on, by the master device, the system optimisation parameter to the custom smart contracts.

13. The method according to any of claims 9 to 12 further comprising a step of: where at least one computing device among the plurality of computing devices deploys a custom smart contract,
adapting or setting constraints on, by the master device, the system optimisation parameter applied to the custom smart contract to other custom smart contracts.
